# EUROPÄISCHE PATENTSCHRIFT

(11) **EP 0 925 668 B1**
(45) Veröffentlichungstag und Bekanntmachung des Hinweises auf die Patenterteilung: **03.12.2008**
(21) Anmeldenummer: 98937536.5
(22) Anmeldetag: 23.06.1998
(51) Int. Cl.: H04L 12/42

(54) **KOPPLUNGSANORDNUNG FÜR EIN MASTER-SLAVE-BUSSYSTEM**
COUPLING ARRANGEMENT FOR A MASTER-SLAVE BUS SYSTEM
SYSTEME DE COUPLAGE POUR SYSTEME DE BUS MAITRE-ESCLAVE

(30) Priorität: 24.06.1997 DE 19726763
(43) Veröffentlichungstag der Anmeldung: 30.06.1999
(73) Patentinhaber: PHOENIX CONTACT GmbH & Co. Kg, 32825 Blomberg (DE)
(72) Erfinder: JASPERNEITE, Jürgen, D-32839 Steinheim (DE); FECHNER, Kai, D-29614 Soltau (DE); DETERT, Volker, D-32278 Kirchlengern (DE)
(74) Vertreter: Elbertzhagen, Otto
(86) Internationale Anmeldenummer: PCT/EP1998/003818
(87) Internationale Veröffentlichungsnummer: WO 1998/059466

(56) Entgegenhaltungen:
- EP-A- 0 416 235
- R.HARTWICH ET AL.: "INITIALIZATING LOOP TRANSMISSION TERMINALS" IBM TECHNICAL DISCLOSURE BULLETIN., Bd. 16, Nr. 4, - September 1973 Seiten 1142-1143, XP002085776 NEW YORK US
- FREES W: "PC-KOMPATIBEL AM INTERBUS-S ZWEI KOMPAKTE BAUGRUPPEN ALS VIELSEITIGES BUS-INTERFACE" ELEKTRONIK, Bd. 42, Nr. 1, 12. Januar 1993, Seiten 56-59, XP000330966

## Beschreibung

### TECHNISCHES GEBIET

Die Erfindung bezieht sich auf eine Anordnung zur Kopplung von Busteilnehmern und Busmaster in einem Master-Slave-Bussystem, welches eine Ringtopologie sowie eine aktive Ankopplung der Busteilnehmer, nämlich der Slaveteilnehmer, ohne Teilnehmeradressen aufweist.

### STAND DER TECHNIK

Bussysteme mit Ringtopologie und aktiver Teilnehmerankopplung, wie sie aus DIN E 19258 bekannt sind, weisen ohne spezielle Vorkehrungen nicht die Möglichkeit auf, einzelne Busteilnehmer aus dem Gesamtsystem zu entfernen oder darin einzufügen. Eine solche Möglichkeit bieten bisher nur Bussysteme mit Linientopologie und passiver Teilnehmerankopplung, wie sie DIN 19245 entsprechen. Aufgrund ihrer Busphysik ist bei den letzteren Bussystemen das Zu- und Abschalten eines Teilnehmers möglich, ohne das Gesamtsystem zum Erliegen zu bringen.

In Ringsystemen anderer Art, nämlich Rechner-Netzwerken, kennt man sogenannte Bypass-Elemente, um bei Entfernen eines Teilnehmers aus dem Ring eine Überbrückung herzustellen. Diese Einrichtungen dienen jedoch ausschließlich der Erhöhung der Verfügbarkeit des Ringsystems, wobei dort die Erholzeit des Systems eine untergeordnete Bedeutung hat. Bei Bussystemen ist es anders, denn hier geht es darum, die Datenübertragung zwischen den miteinander gekoppelten Rechner- oder Steuerungssystemen unterschiedlichster Ausprägung nicht zu unterbrechen, andernfalls muß nicht nur die Datenverknüpfung sondern auch die Funktion der Steuersysteme völlig neu aufgebaut werden.

In Dokument XP 330 966 ist ein Interbus-S-Zugriffsverfahren offenbart, wobei einzelne Netzsegmente vom Busmaster über Busklemmen aktiviert oder deaktiviert werden.

### DARSTELLUNG DER ERFINDUNG

Der Erfindung liegt deshalb die Aufgabe zugrunde, für ein Master-Slave-Bussystem der eingangs genannten Art eine Kopplungsanordnung zu schaffen, bei der im Störfalle, wie beim Ankoppeln, dem Abkoppeln oder einem Fehler des betreffenden Slaveteilnehmers die schnelle und direkte Ansteuerung ohne Teilnehmeradressen nur so kurzzeitig unterbrochen wird, daß eine Beeinflussung der über das Bussystem verbundenen Steuerungs- oder Rechnersysteme nicht erfolgt.

Diese Aufgabe wird bei einem erfindungsgemäßen Master-Slave-Bussystem in Ringtopologie dadurch gelöst, daß jedem Slaveteilnehmer ein Bypass-Element zugeordnet ist. Über dieses Bypass-Element wird der Busmaster beim Abkoppeln und Ankoppeln des zugehörigen Slaveteilnehmers veranlaßt, kurzzeitig den direkten Datenaustausch mit den Slaveteilnehmern zu unterbrechen und eine Adressenabfrage zwecks Neustrukturierung des Protokollablaufs vorzunehmen, wozu die Bypass-Elemente einen nur bei dieser Adressenabfrage anwählbaren Adressenspeicher haben, der beim Datenaustausch inaktiv ist.

Für die Erfindung ist wesentlich, daß in dem für eine äußerst schnelle Datenübertragung geeigneten Master-Slave-Bussystem mit aktiver Ankopplung der Busteilnehmer ohne Teilnehmeradressen ein Herausnehmen, ein Einwechseln oder ein Ausfall eines der Slaveteilnehmer nur zu einer kurzzeitigen Neustrukturierung des Protokollablaufs führt, von dem - entsprechend rückwirkungsfrei - die angeschlossenen Steuerungs- oder Rechnersysteme nicht beeinflußt werden. Nach der Neustrukturierung des Ringsystems, das infolge der erfindungsgemäß vorhandenen Bypass-Elemente physikalisch nicht unterbrochen wird, setzt sich der Datenaustausch zwischen dem Busmaster und den Slaveteilnehmern fort, wobei von vornherein die veränderte Ringtopologie nach dem Eintreten eines Störfalles im Protokollablauf des Busmasters berücksichtigt werden kann.

Die Bypass-Elemente können entweder physikalisch getrennt von dem jeweils zugehörigen Slaveteilnehmer angeordnet werden oder in diesen so integriert sein, daß dennoch ein Auswechseln allein des Slaveteilnehmers möglich ist, wie es im Defektfalle erforderlich wird. Entscheidend ist, daß die Ringtopologie des Bussystems erhalten bleibt, indem die Bypass-Elemente untereinander mittels der hin- und rückführenden Datenkanäle verbunden sind.

Damit der Slaveteilnehmer in den Datenaustausch des Ringsystems einbezogen werden kann, ist er mit dem zugeordneten Bypass-Element über eine Empfangsdatenleitung sowie über eine Sendedatenleitung verbunden. Zusätzlich besteht zwischen jedem Slaveteilnehmer und dem zugehörigen Bypass-Element eine Verbindung mittels einer Steuerleitung, über die an das Bypass-Element entweder ein Abkopplungssignal oder ein Ankopplungssignal gegeben wird, je nachdem welche Zustandsänderung gerade eintritt.

Die vom Busmaster auslesbaren Adresspeicher sind jeweils in den Bypass-Elementen angeordnet, jedoch vorzugsweise von dort nicht unmittelbar abrufbar. So sind in zweckmäßiger Ausgestaltung der Erfindung die Adresspeicher der Bypass-Elemente jeweils mittels einer Schnittstelle mit dem zugehörigen Slaveteilnehmer verbunden, damit nur über diesen im Ankopplungszustand die Adresspeicher ausgelesen werden können. Ist infolge Fehlens oder Defektes des Slaveteilnehmers der Adresspeicher durch den Busmaster nicht erreichbar, wird für den weiteren Protokollablauf im Busmaster nicht noch eine zusätzliche Auswertung der Daten des Adresspeichers des fehlenden Slaveteilnehmers erforderlich.

Vorteilhaft sind die Bypässe aus einer permanenten, passiven Schaltung aufgebaut, die eine explizite Spannungsversorgung nicht benötigt.

### KURZE BESCHREIBUNG DER ZEICHNUNGEN

Die Erfindung wird nachfolgend anhand der Zeichnung an einem Ausführungsbeispiel noch näher erläutert. Dabei zeigen:
- Fig. 1: eine schematische Darstellung eines MasterSlave-Bussystems und
- Fig. 2: eine schematische Darstellung eines der Slave-teilnehmer mit zugehörigem Bypass des Bussystems nach Fig. 1.

### WEGE ZUR AUSFÜHRUNG DER ERFINDUNG

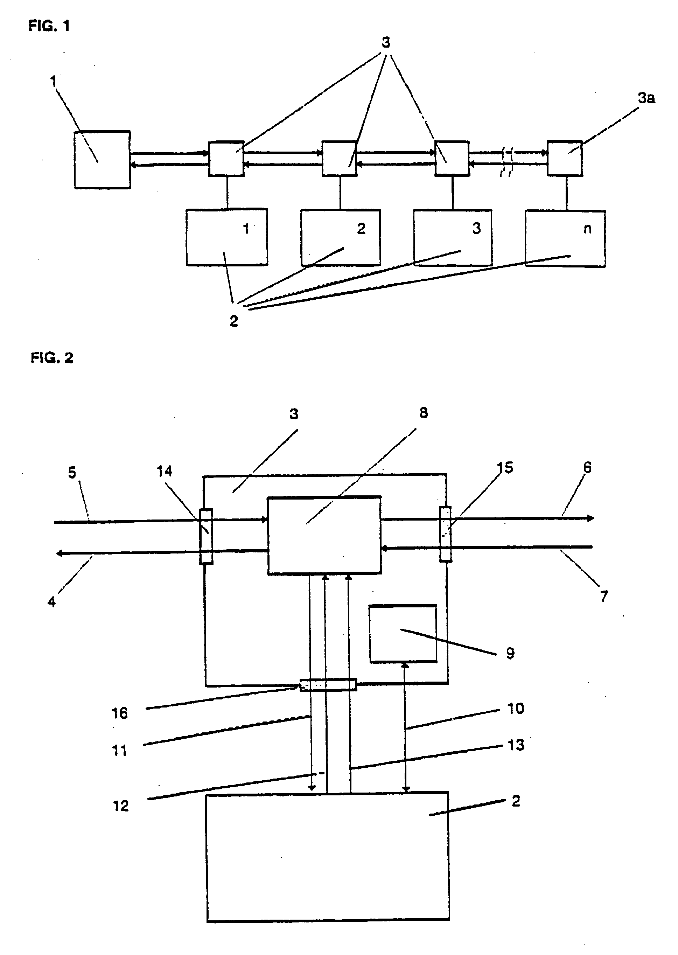

Im einzelnen erkennt man in Fig. 1 einen zentralen Busmaster 1, über den das sogenannte Buszugriffsverfahren des gesamten Systems gesteuert wird. Die Anzahl der zugehörigen Slaveteilnehmer 2 kann unterschiedlich sein, beispielhaft sind in Fig. 1 die einzelnen Slaveteilnehmer 2 ihrer physikalischen Reihenfolge nach numeriert. Die Slaveteilnehmer 2 sind nicht unmittelbar an das Buskabel angeschlossen, welches die Verbindung mit dem Busmaster 1 herstellt, sondern weisen je ein ihnen zugeordnetes Bypass-Element 3 auf, welches nach Art eines Vierpols in das Buskabel mit der hinlaufenden und der rücklaufenden Datenleitung eingefügt ist. Der physikalisch letzte Slaveteilnehmer schließt mit seinem Buselement 3a den Ring des in Ringtopologie aufgebauten Bussystems. Für diese Form des Master-Slave-Bussystems ist wegen der physikalisch eindeutigen Lage der Slaveteilnehmer 2 kein explizites Adressierungsverfahren notwendig. Allerdings ist es dennoch erforderlich, daß der Busmaster 1 erkennen kann, ob der einzelne Slaveteilnehmer 2 angekoppelt, abgekoppelt oder durch einen Defekt beispielsweise ausgefallen ist, dazu dienen die permanent im Ringbussystem verbleibenden Bypass-Elemente 3.

Die notwendigen Komponenten für ein solches Bypass-Element 3 ergeben sich aus Fig. 2. Über eine Schnittstelle 14 wird der vom vorherigen Slaveteilnehmer oder vom Busmaster ankommende Datenkanal 5 und entsprechend der dorthin zurück führende Datenkanal 4 in das Bypass-Element 3 eingeführt. Das Bypass-Element 3 weist eine weiterführende Schnittstelle 15 auf, über die der zum physikalisch nachfolgenden Slaveteilnehmer führende Datenkanal 6 sowie der von hier rückführende Datenkanal 7 angeschlossen sind. Die Datenkanäle 4, 5 und 6, 7 sind an ein Überbrückungselement 8 angeschlossen, welches über eine weitere Schnittstelle 16 mit dem zugehörigen Slaveteilnehmer 2 verbunden ist. Über diese Schnittstelle 16 führt eine Empfangsdatenleitung 11 sowie eine Sendedatenleitung 12 zum Slaveteilnehmer 2 bzw. von dort zurück zum Überbrückungselement 8. Weiter ist über die Schnittstelle 16 noch eine Steuerleitung 13 vom Slaveteilnehmer 2 zum Überbrückungselement 8 geführt und unabhängig davon gibt es eine vierte Schnittstelle 10, über die der Slaveteilnehmer 2 mit einem Adresspeicher 9 im Bypass-Element 3 verbunden ist.

Ist der Slaveteilnehmer 2 aktiv in das Ringsystem eingekoppelt, wird an der ankommenden Schnittstelle 14 der Sendedatenstrom des physikalischen Vorgängers im Ringsystem über den Empfangsdatenkanal 5, durch das Überbrückungselement 8 und die Empfangsdatenleitung 11 der Schnittstelle 16 des Bypass-Elementes 3 dem Slaveteilnehmer 2 transparent zugeführt. Der Sendedatenstrom für den physikalischen Nachfolger des Slaveteilnehmers 2 wird über die Sendedatenleitung 12 sowie über die weiterführende Schnittstelle 15 des Bypass-Elementes mit Hilfe des Sendedatenkanals 6 geleitet. Umgekehrt wird der Sendedatenstrom des physikalischen Nachfolgers an der weiterführenden Schnittstelle 15 des Bypass-Elementes 3 über den Empfangsdatenkanal 7 transparent dem jeweiligen physikalischen Vorgänger über den Sendedatenkanal 4 der ankommenden Schnittstelle 14 zugeführt.

Die Anweisung über den Ankopplungs- oder Abkopplungszustand des Slaveteilnehmers 2 wird dem Überbrückungselement 8 mit Hilfe der Steuerleitung 13 mitgeteilt. Hierbei bedeutet ein Low-Zustand auf der Steuerleitung 13 die Aufforderung zum Verbinden der ankommenden Schnittstelle 14 und der weiterführenden Schnittstelle 15 des Bypass-Elementes im Überbrückungselement 8, womit der Slaveteilnehmer 2 aus dem Ringbussystem entfernt ist. Entsprechend wird über einen High-Zustand auf der Steuerleitung 13 das Einfügen des Slaveteilnehmers 2 in das Ringsystem signalisiert. Kriterien für das Entfernen des Slaveteilnehmers 2 aus dem Ringbussystem können das Fehlen der Versorgungsspannung am Slaveteilnehmer 2 oder das betriebsmäßig notwendige, physikalische Entfernen des Slaveteilnehmers 2 sein. Auch kann ein Abkoppeln des Slaveteilnehmers 2 aufgrund einer Eigenüberwachung im Defektzustand mit Hilfe der Steuerleitung 13 ausgelöst werden.

Bestimmungsgemäß sind in dem Ringbussystem für die Slaveteilnehmer 2 grundsätzlich keine Geräteadressen für den Datentransfer erforderlich und vorgesehen, es gibt hier lediglich Identifikationskodierungen, die bei Slaveteilnehmern mit gleicher Funktionalität identisch sind. Zur Differenzierung, ob bei mehreren solcher gleichenartigen Slaveteilnehmern 2 der einzelne Slaveteilnehmer 2 vorhanden ist oder nicht, ist der erwähnte Adresspeicher 9 im Bypass-Element 3 notwendig. Dieser Adresspeicher 9 dient der nichtflüchtigen Speicherung und Abfrage einer durch den Busmaster 1 vergebenen Nummer, die über den Slaveteilnehmer 2 mit Hilfe der physikalischen Schnittstelle 10 aus dem im Bypass-Element 3 befindlichen Adresspeicher 9 ausgelesen wird. Diese Adresskodierung kann während der Inbetriebnahme des Bussystems über die üblichen Nachrichtenübertragungszyklen erfolgen. Hierdurch kann der eingefügte oder der entfernte Zustand des jeweiligen Slaveteilnehmers 2 von anderen gleichartigen Slaveteilnehmern 2 vom Busmaster 1 eindeutig unterschieden werden.

Nach der Installierungsphase, in der die angeschlossenen Slaveteilnehmer 2 erfaßt und ihnen eine Geräteadresse vermittelt wurde, leitet der Busmaster 1 den zyklischen Datenaustausch mit allen angekoppelten Busteilnehmern 2 ein. Kommt es in dieser eingeschwungenen Betriebsphase zu einem Ab- bzw. Ankopplungsvorgang eines Busteilnehmers 2, stellt der Busmaster 1 mit Hilfe einer geeigneten Systemdiagnose diese Veränderung im Ringbussystem fest und identifiziert den ab- bzw. angekoppelten Busteilnehmer 2 durch das Abfragen aller Geräteadressen und einen Vergleich mit der bisherigen Geräteadressliste. Nach der Durchführung einer in Abhängigkeit vom Übertragungsprotokoll unterschiedlich aufwendigen Umorganisation der Teilnehmerlisten im Busmaster 1 erfolgt die Fortführung des zyklischen Datenaustauschs.

## Patentansprüche

1. Buszugriffsverfahren zur Kopplung von Busteilnehmern und Busmaster in einem Master-Slave-Bussystem, welches eine Ringtopologie sowie eine aktive Ankopplung der Slaveteilnehmer (2) ohne Teilnehmeradresse aufweist, wobei jedem Slaveteilnehmer (2) ein Bypass-Element (3) zugeordnet ist,
**dadurch gekennzeichnet,**
**daß** jedes Bypass-Element (3) einen Adressenspeicher (9) für eine in der Ringtopologie eindeutige Geräteadresse hat und dieser Adressenspeicher (9) mittels einer Schnittstelle (10) mit dem zugehörigen Slaveteilnehmer (2) verbunden und nur über diesen Slaveteilnehmer (2) im Ankopplungszustand vom Busmaster (1) zwecks Geräteadressenabfrage angewählt sowie ausgelesen wird, wobei beim Ankoppeln oder Abkoppeln des Slaveteilnehmers (2) das zugehörige Bypass-Element (3) den Datenaustausch unterbricht und die Abfrage der Geräteadressen in den Adressenspeichern (9) der Slaveteilnehmer (2) durch den Busmaster (1) veranlaßt und wobei der Busmaster (1) anhand einer Geräteadressenliste den an- oder abgekoppelten Slaveteilnehmer (2) identifiziert und eine Neustrukturierung des Systems vornimmt.

2. Buszugriffsverfahren nach Anspruch 1,
**dadurch gekennzeichnet,**
**daß** die Bypass-Elemente (3) untereinander mittels der hin- und rückführenden Datenkanäle (5, 6; 4, 7) der Ringtopologie verbunden sind.

3. Buszugriffsverfahren nach Anspruch 2,
**dadurch gekennzeichnet,**
**daß** die Bypass-Elemente (3) aus einer passiven Schaltungsanordnung aufgebaut sind, die im Abkoppel-Zustand des jeweiligen zugehörigen Slaveteilnehmers (2) ohne Spannungsversorgung arbeitet.

4. Buszugriffsverfahren nach Anspruch 2 oder 3,
**dadurch gekennzeichnet,**
**daß** jeder Slaveteilnehmer (2) mit dem zugehörigen Bypass-Element (3) über eine Empfangsdatenleitung (11) sowie über eine Sendedatenleitung (12) und zusätzlich über eine Steuerleitung (13) verbunden ist, wobei über letztere ein Ankopplungs- bzw. ein Abkopplungssignal an das Bypass-Element (3) gegeben wird.

## Claims

1. Bus access method for coupling bus subscribers and bus masters in a master-slave bus system, comprising a ring topology and active coupling of the slave subscribers (2) without subscriber addresses, wherein a bypass element (3) is allocated to each slave subscriber (2),
**characterised in that**
each bypass element (3) has an address store (9) for a clear device address in the ring topology and this address store (9) is connected by means of an interface (10) to the associated slave subscriber (2) and only selected and read for the purpose of device address interrogation via this slave subscriber (2) in the coupled state of the bus master (1), wherein during coupling or uncoupling of the slave subscriber (2) the associated bypass element (3) interrupts the data exchange and triggers the interrogation of the device addresses in the address stores (9) of the slave subscribers (2) through the bus master (1) and wherein the bus master (1) identifies the coupled or uncoupled slave subscriber (2) by reference to a device address list and performs a restructuring of the system.

2. Bus access method according to claim 1,
**characterised in that**
the bypass elements (3) are connected to each other by means of the data channels (5, 6; 4, 7) of the ring topology running to and from them.

3. Bus access method according to claim 2,
**characterised in that**
the bypass elements (3) are formed by a passive switching arrangement which works without a power supply in the uncoupled state of the respective associated slave subscriber (2).

4. Bus access method according to claim 2 or 3,
**characterised in that**
each slave subscriber (2) is connected to the associated bypass element (3) via a received data line (11) and via a sending data line (12) and additionally via a control line (13), wherein a coupled or uncoupled signal is given to the bypass element (3) via the control line (13).

## Revendications

1. Procédé d'accès à un bus pour le couplage des abonnés du bus et du maître du bus dans un système de bus maître-esclave, qui présente une topologie en anneau ainsi qu'un couplage actif des abonnés-esclaves (2), sans adresse d'abonnés, un élément de dérivation (3) étant associé à chaque abonné-esclave (2),
**caractérisé en ce que**
chaque élément de dérivation (3) possède une mémoire d'adresses (9) pour une adresse univoque d'appareil dans la topologie en anneau, et cette mémoire d'adresses (9) est reliée, au moyen d'une interface (10) à l'abonné-esclave (2) associé, et ne peut être sélectionnée que par l'intermédiaire de cet abonné-esclave (2), à l'état couplé du maître du bus (1), aux fins de recherche d'adresse d'appareils, ainsi que lue, l'élément de dérivation (3) associé interrompant l'échange de données, lors du couplage ou du découplage de l'abonné-esclave (2), et l'appel des adresses d'appareils étant déterminée par le maître du bus (1) dans les mémoires d'adresses (9) des abonnés-esclaves (2), et le maître du bus (1) identifiant, à l'appui d'une liste d'adresses d'appareils, l'abonné-esclave (2) couplé ou découplé, et entreprenant une nouvelle structuration du système.

2. Procédé d'accès à un bus selon la revendication 1,
**caractérisé en ce que**
les éléments de dérivation (3) sont reliés les uns aux autres au moyen des canaux de données aller et retour (5, 6 ; 4, 7) de la topologie en anneau.

3. Procédé d'accès à un bus selon la revendication 2,
**caractérisé en ce que**
les éléments de dérivation (3) sont consistent en un circuit de commutation passif qui travaille sans alimentation en tension à l'état découplé de l'abonné-esclave (2) respectivement associé.

4. Procédé d'accès à un bus selon revendication 2 ou 3,
**caractérisé en ce que**
chaque abonné-esclave (2) est relié, à l'élément de dérivation (3) y associé, par l'intermédiaire d'une ligne de réception de données (11) ainsi que par l'intermédiaire d'une ligne d'émission de données (12) et, en supplément, par l'intermédiaire d'une ligne de commande (13), cette dernière adressant à l'élément de dérivation (3) un signal de couplage, respectivement un signal de découplage.
